# EUROPÄISCHE PATENTSCHRIFT

(11) **EP 1 447 384 B1**
(45) Veröffentlichungstag und Bekanntmachung des Hinweises auf die Patenterteilung: **03.12.2008**
(21) Anmeldenummer: 04000485.5
(22) Anmeldetag: 13.01.2004
(51) Int. Cl.: C02F 9/00

(54) **Anlage zur Entfernung und Deaktivierung von Organismen im Ballastwasser**
Apparatus for removing and deactivating organisms present in ballast water
Appareil pour enlever et désactiver les organismes présents dans l'eau de lestage

(30) Priorität: 15.02.2003 DE 20302516 U
(43) Veröffentlichungstag der Anmeldung: 18.08.2004
(73) Patentinhaber: Hamann AG, 21279 Hollenstedt (DE)
(72) Erfinder: Hamann, Knud, 21279 Appel (DE); Hamann, Holger, 21218 Seevetal (DE)
(74) Vertreter: Hauck Patent- und Rechtsanwälte

(56) Entgegenhaltungen:
- WO-A-02/44089
- US-A- 5 807 486
- US-A1- 2003 015 481
- US-B1- 6 464 884
- SUTHERLAND T F ET AL: "Effect of a ballast water treatment system on survivorship of natural populations of marine plankton" MARINE ECOLOGY PROGRESS SERIES, Nr. 210, 26. Januar 2001 (2001-01-26), Seiten 139-148, XP002277680 ISSN: 0171-8630
- "REGAL PRINCESS BECOMES FIRST CRUISE SHIP TO RETROFIT BALLAST WATER TREATMENT PLANT" MARINE ENGINEERS REVIEW, INSTITUTE OF MARINE ENGINEERS. LONDON, GB, Juli 2000 (2000-07), Seiten 13-14, XP000965818 ISSN: 0047-5955

## Beschreibung

Die Erfindung bezieht sich auf eine Anlage zur Entfernung und Deaktivierung von Organismen in Ballastwasser nach dem Oberbegriff des Anspruchs 1.

Mit dem Ballastwasser nehmen Schiffe die verschiedenartigsten tierischen und pflanzlichen Organismen auf, z.B. Muscheln, Fische, Würmer, Krebse, Bakterien, Viren und so weiter, die sie in fremden Gebieten, in denen diese nicht heimisch sind, wieder abgeben. Diese Organismen können sich oft in ihrer neuen Umgebung schnell ausbreiten, weil es an natürlichen Feinden mangelt. Dadurch können große ökologische und/oder ökonomische Schäden verursacht werden.

Es sind verschiedene Verfahren bekannt, die ein Eintragen von Organismen mit dem Wasser in Tanks verhindern sollen, beispielsweise durch Filtration, Behandlung mit Hitze, durch Umkehrosmose oder UV-Bestrahlung. Ferner ist bekannt, Organismen im Wasser chemisch zu bekämpfen. Alle genannten Methoden sind jedoch bei der Anwendung auf Ballastwasser unzureichend. Das Ballastwasser wird in sehr großer Geschwindigkeit bzw. großer Menge innerhalb kürzester Zeit in die Ballasttanks befördert. Dabei muß sichergestellt werden, daß in dem relativ kurzen Zeitraum das Ballastwasser weitgehend keimfrei gemacht worden ist.

Der Erfindung liegt die Aufgabe zugrunde, eine Anlage zur Entfernung und Deaktivierung von tierischen und pflanzlichen Organismen im Ballastwassser zu schaffen, die bei der Befiillung oder Leerung des Tanks mit wenig aufwendigen Mitteln den Sicherheitsanforderungen Rechnung trägt. Ferner soll die erfindungsgemäße Anlage einen geringen apparativen Aufwand verursachen und etwa auf Schiffen auch einfach nachgerüstet werden können.

Aus US 2003/015,481 A1 ist eine Vorrichtung zur Behandlung von Ballastwasser bekannt, bei der Ozon erzeugt und unter konstantem Druck mit einem Venturi-Injektor in eine zu einem Tank führende Ballastwasserleitung eingespeist wird. Zwischen dem Einleitungspunkt des Ozons in der Ballastwasserleitung und einem aufströmseitigen Punkt dieser Leitung ist eine Pumpe parallel geschaltet, in deren Ausgangsleitung das Ozon eingespeist wird. Die Ozonbehandlung des Ballastwassers kann mit einem Hydrozyklon und einer Filtervorrichtung kombiniert werden.

Aus WO 02/44089 A2 ist eine Vorrichtung zur Behandlung von Ballastwasser bekannt. Die bekannte Vorrichtung umfaßt ein Wasseraufnahmesystem, einen Tank zur Aufnahme des Ballastwassers sowie Vorrichtungen zur Erzeugung eines Biozids und zu dessen Einleitung in den Tank. Die Konzentration des Biozids in dem Tank wird gemessen und kann durch gezielte Biozideinleitung auf einem bestimmten Niveau gehalten werden. Alternativ wird die Menge des aufgenommenen Wassers gemessen und eine für die gewünschte Biozid-Konzentration im Tank erforderliche Biozidmenge in den Tank eingeleitet. Das Wasseraufuahmesystem kann mit einer Filtereinrichtung zur Vorreinigung des Wassers versehen sein, die einen Hydrozyklon umfassen kann.

Davon ausgehend ist es die Aufgabe der Erfindung, eine Anlage zur Deaktivierung von Organismen im Ballastwasser zur Verfügung zu stellen, die eine effizientere Behandlung des Ballastwassers auch bei variablen Förderraten ermöglicht.

Diese Aufgabe wird durch die Merkmale des Anspruchs 1 gelöst.

Die erfindungsgemäße Anlage besteht aus mindestens zwei Komponenten. Die eine weist eine Schwerkraftabscheidung auf in Form einer Gruppe von Hydrozyklonen, die parallel geschaltet sind, wobei eine Steuervorrichtung dafür sorgt, daß nur soviel

Hydrozyklone in Betrieb sind, wie benötigt werden. Hydrozyklone haben bekannt lich nur einen eingeschränkten Betriebsbereich. Daher schaltet eine Steuervorrichtung die Hydrozyklone nach Maßgabe der Fördermenge ein bzw. aus. Die Hydrozyklone reduzieren nicht nur signifikant die mit dem Wasser mitgeführte Sedimentfracht, sondern entfernen auch einen großen Teil größerer Organismen, z.B. in einer Größe von mehr als 300µm. Die Hydrozyklone sind so ausgelegt, daß diese Organismen wirksam separiert werden können, auch wenn ihr spezifisches Gewicht nur geringfügig größer als 1 ist.

Eine Besonderheit der Hydrozyklone besteht darin, daß beliebig viele zusammengeschaltet werden können, um sie im Rahmen ihres Betriebsoptimums an jede beliebige Durchflußmenge anzupassen. Hydrozyklone haben auch den Vorteil, daß sie nahezu wartungsfrei und betriebssicher sind. Sie sind unempfindlich gegen Verstopfungen und lassen sich gegebenenfalls einfach und schnell warten. Nach einer Ausgestaltung der Erfindung weisen sie eine korrosionsbeständige, verschleißfeste Oberfläche auf, z.B. in Form einer Beschichtung. Dadurch sind die Innenwände vor abrasiven und korrosiven Beanspruchungen geschützt.

Die erste Förderpumpe ist vorzugsweise eine Kreiselpumpe, wie sie etwa als Ballastwasserpumpe üblicherweise im Einsatz ist.

Nach einer weiteren Ausgestaltung der Erfindung ist der Unterlauf der Hydrozyklone mit einer zweiten Förderpumpe verbunden, der eine erste Regelvorrichtung zugeordnet ist, die die Fördermenge in der Unterlaufleitung mißt und in Abhängigkeit von der Anzahl der eingeschalteten Hydrozyklone einen vorgegebenen konstanten Mengenstrom fördert. Diese Maßnahme stabilisiert den Betrieb der Hydrozyklone. Die zweite Förderpumpe, die vorzugsweise eine Verdrängerpumpe ist, ist in Stufen konstanter Fördermenge schaltbar, wobei jede Stufe auf eine vorgegebene Anzahl in Betrieb befindlicher Hydrozyklone eingestellt ist. Alternativ ist denkbar, zumindest einem Teil der Zyklone jeweils eine Abförderpumpe im Unterlauf zuzuordnen.

Es ist auch denkbar, eine andere Schwerkraftabscheidung vorzusehen, z.B. eine Zentrifuge oder dergleichen. Es ist ferner denkbar, auf eine Schwerkraftabscheidung zu verzichten und statt dessen eine geeignete Filtervorrichtung vorzusehen. Die Filtervorrichtung ist dafür auszulegen, daß auch gröbere Teilchen problemlos abgeschieden werden können.

Nach einer anderen Ausgestaltung der Erfindung ist in der Leitung zur Filtervorrichtung ein Regelventil angeordnet, dem eine zweite Regelvorrichtung zugeordnet ist, die durch Regelung des Durchströmquerschnitts des Regelventils einen vorgegeben Druck in der aufströmseitigen Leitung aufrechterhält. Auch diese Maßnahme dient dem stabilen Betrieb der Hydrozyklone, welche insbesondere beim Rückspülbetrieb des Filters zum Tragen kommt. Bekanntlich sinkt der Druck am Filter während des Rückspülbetriebs deutlich ab. Gleichwohl muß der Betrieb der Hydrozyklone aufrechterhalten bleiben.

Eine der Schwerkraftabscheidung nachgeordnete Filtervorrichtung dient zur Feinfiltration und damit zum Abscheiden von Teilen und Keimen kleinerer Dimension, etwa im Bereich von 300µm bis 50µm. Organismen, die sich aufgrund ihrer Geometrie und Größe mit der Filtervorrichtung nicht abscheiden lassen, werden gegebenenfalls so geschädigt, daß sie einer chemischen oder sonstigen weiteren Behandlungsstufe gut zugänglich sind. Besonders vorteilhaft ist die Verwendung einer Filtervorrichtung, wie sie aus der DE 4312731 bekannt geworden ist. Jede Filterpatrone einer mehrere Filterpatronen aufweisenden Filtervorrichtung weist eine Schicht aus übereinandergesetzten Elementen aus elastisch verformbarem Material auf, von denen jeweils zwei benachbarte Elemente einen durchströmbaren Spalt bilden. Jedes Element hat an seiner Zuströmseite eine mit ihrer breiten Vorderfläche der Strömung zugewandte in Strömungsrichtung elastisch auslenkbare und elastisch verformbare Lippe, deren Öffnungskante mit der gegenüberliegenden festen Öffnungskante des benachbarten Elements die Spaltöffnung bildet. Ein mit der Strömung klemmend in der Spaltöffnung eindringender Partikel übt eine die Spaltöffnung verengende Mitnahmekraft auf die Öffnungskante der Lippe aus.

Bei dem beschriebenen Rückspülfilter wird im Rückspülbetrieb die von den Hydrozyklonen kommende gereinigte Flüssigkeit gegen die Abströmseite einer Filterfläche gerichtet, während die Anströmseite mit einer Rückspülpumpe in einem Rückspülzweig verbunden ist. Der Rückspülbetrieb wird vorzugsweise eingeleitet, wenn das Filter sich allmählich zusetzt. Dieser Fall wird nach einer Ausgestaltung der Erfindung durch eine Differenzdruckmessung erfaßt. Ist der Differenzdruck ein vorgegebener Wert, wird über die Steuervorrichtung der Rückspülbetrieb eingeleitet. Die zuvor beschriebene Regelung im Ober- und Unterlauf der Zyklone sorgt dafür, daß der Rückspülbetrieb keine negativen Auswirkungen auf den Betrieb der Hydrozyklone hat.

Im Wasser befindliche Organismen und Keime abströmseitig der Filtervorrichtung werden durch die letzte Komponente der erfindungsgemäßen Anlage unschädlich gemacht, vorzugsweise durch eine chemische Behandlung, mit einem Mittel, das vorzugsweise eine kurze Abbauzeit aufweist und dann biologisch unschädlich ist. Die Zugabe einer Chemikalie, beispielsweise ein Gemisch organischer Säuren, wie Peressigsäure, Wasserstoffperoxid usw., hat den Vorteil, daß sie nicht nur bei Eingabe in das Wasser eine desinfizierende Wirkung entfaltet, sondern auch anschließend im Tank, wenn das Ballastwasser in einen Tank gefördert wird. Solange sich das Wasser im Tank befindet, besteht nicht die Gefahr einer ökologischen Schädigung. Wenn sich die Chemikalie rasch abbaut, kann das Ballastwasser, falls gefordert, nach kurzer Zeit z.B. in das Meer eingeleitet werden.

Die Zufuhr der Chemikalie, vorzugsweise ein rein oxidativ wirkendes Biozid, ist abhängig von dem Fördervolumen. Es versteht sich, daß neben der chemischen Behandlungsstufe zusätzlich andere Behandlungsmöglichkeiten denkbar sind, beispielsweise eine UV-Bestrahlung oder dergleichen.

Für die Aufgabe des Biozids sieht die Erfindung eine Dosiervorrichtung vor, wobei zwischen dem Einleitungspunkt in der Ausgangsleitung der Filtervorrichtung und einem aufströmseitigen Punkt der Ausgangsleitung eine Druckerhöhungspumpe. geschaltet ist, und eine Dosierpumpe das Biozid in die Ausgangsleitung der Druckerhöhungspumpe z.B. über eine Düse eingibt. Bei dieser Bypassdosierung wird dem filtrierten Wasser ein Teilstrom entnommen und unter erhöhten Druck gesetzt. In der Einspritzarmatur wird in dieses Druckwasser das Biozid eindosiert. Aufgrund dieser Zumischung findet bereits eine Vorvermischung des Biozids mit Wasser statt. Das vorvermischte Wasser wird unter Umwandlung der Druckenergie in kinetische Energie in den Hauptstrom gegeben.

Es ist ein statischer Mischer nachgeschaltet, der für eine innige Vermischung des Mikrobiozids mit dem zu behandelnden Wasser sorgt. Die beschriebene Zudosierung des Mikrobiozids geschieht mit sehr geringen Druckverlusten. Daher ist nicht erforderlich, die erste Förderpumpe so auszulegen, daß ein zusätzlicher Druckverlust aufgefangen werden muß.

Die einzelnen Behandlungsstufen weisen vorzugsweise einen Bypass auf, so daß bei Fehlfunktionen oder Ausfall der Hilfsenergie gleichwohl ein Wasserdurchfluß gewährleistet ist, um z.B. die Schiffssicherheit gewährleisten zu können. Fällt z.B. die mechanisch-physikalische Behandlungsstufe etwa durch Wegfall der Hydrozyklonstufe oder Filtervorrichtung, fort, dann kann z.B. durch eine automatisch erfolgende Erhöhung der Dosiermenge des Mikrobiozids dieser Ausfall kompensiert werden, so daß auf jeden Fall eine Behandlung des geförderten Wassers gewährleistet ist.

Die erfindungsgemäße Anlage ist so konzipiert, daß sie nahezu wartungsfrei betrieben werden kann und höchstmögliche Betriebssicherheit gewährleistet. Sie ist für Neubauten und für Nachrüstungen gleichermaßen geeignet. Die äußeren Abmessungen der gesamten Anlage können sich am Platzangebot, etwa auf Schiffen, orientieren. Alle Komponenten kommen mit der üblichen Deckhöhe aus. Der elektrische Leistungsbedarf ist relativ gering.

Die erfindungsgemäße Anlage ist nicht beschränkt in Ihrer Anwendung auf Schiffe, vielmehr kann sie auch für Landanlagen eingesetzt werden, wenn eine gleiche oder ähnliche Aufgabenstellung vorliegt.

Die Erfindung wird nachfolgend anhand eines in Zeichnungen dargestellten Ausführungsbeispiels näher erläutert.
- Fig. 1: zeigt schematisch eine Anlage nach der Erfindung.
- Fig. 2: zeigt einen Hydrozyklon der Anlage nach Fig. 1 in Seitenansicht.
- Fig.: 3 zeigt die Seitenansicht des Hydrozyklons nach Fig. 2 um 180° verdreht.
- Fig. 4: zeigt die Seitenansicht einer Gruppe von Hydrozyklonen für die Anlage nach Fig. 1
- Fig. 5: zeigt die Draufsicht auf die Gruppe nach Fig. 4.
- Fig. 6: zeigt die Seitenansicht der Hydrozyklone nach Fig. 4.
- Fig. 7: zeigt im Schnitt die Einspeisung des Mikrobizids in die Ausgangsleitung der Filtervorrichtung.
- Fig. 8: zeigt eine schematische auseinandergezogene perspektivische Ansicht eines statischen Mischers der Anlage nach Fig. 1.

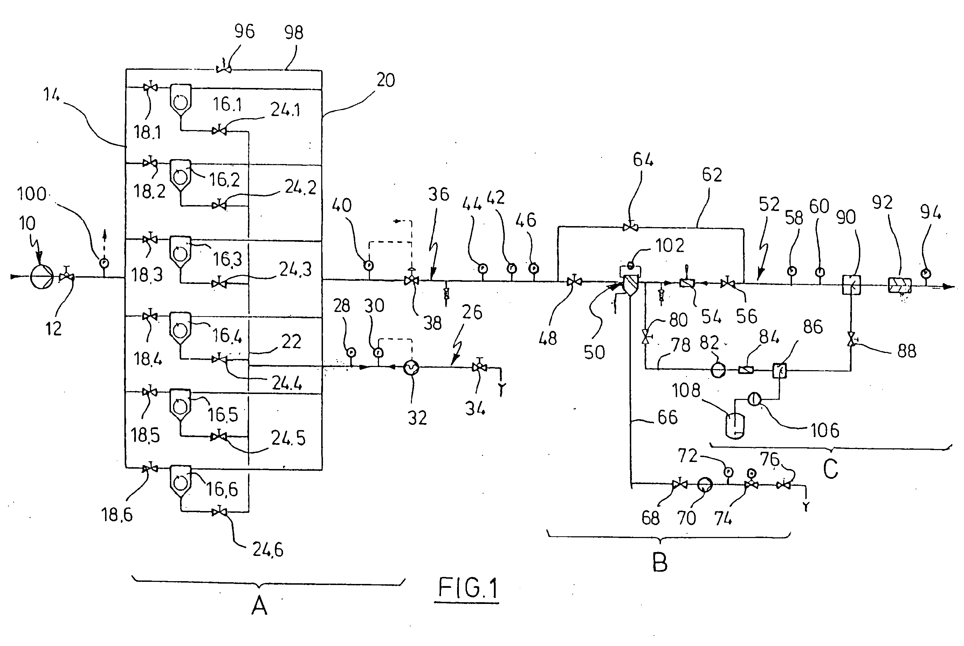

Die Anlage nach Fig. 1 weist die Stufen oder Komponenten A, B und C auf. Die Komponente A dient der Schwerkrafttrennung von Teilen im Wasser, die schwerer als Wasser sind. Die Komponente B betrifft eine Feinfiltrationsstufe.

Die Komponente C betrifft die Zudosierung eines Desinfektionsmittels. Nachfolgend soll zu den einzelnen Komponenten näher Stellung bezogen werden.

Eine erste Förderpumpe 10, vorzugsweise eine Kreiselpumpe fördert über ein Absperrventil 12 in eine Leitung 14, die mit sechs Hydrozyklonen 16.1 bis 16.6 in Verbindung steht über Absperrventile 18.1 bis 18.6. Der Oberlauf der Hydrozyklone 16.1 bis 16.6 ist verbunden mit einer gemeinsamen Leitung 20. Der Unterlauf der Hydrozyklone 16.1 bis 16.6 ist mit einer gemeinsamen Leitung 22 verbunden über Absperrventile 24.1 bis 24.6. Die Leitung 22 ist verbunden mit einem Leitungszweig 26, in dem sich ein Druckmesser 28, Durchflußmengenmesser 30, eine zweite Förderpumpe 32 sowie ein Absperrventil 34 befindet. Auf die Funktion der beschriebenen Teile wird weiter unten eingegangen.

Die Leitung 20 ist mit einem Leitungszweig 36 verbunden, in dem ein Regelventil 38 angeordnet ist. Ferner sind an dem Leitungszweig 36 ein Druckmesser 40 vor dem Ventil 38 und ein Durchflußmengenmesser 42 hinter dem Ventil 38 angeschlossen. Vor und hinter dem Durchflußmengenmesser 42 sind weitere Druckmesser 44 und 46 angeordnet.

Über ein Absperrventil 48 ist mit dem Zweig 36 eine rückspülbare Filtervorrichtung 50 in Verbindung. In einer Ausgangsleitung 52 der Filtervorrichtung 50 sind eine Regelarmatur 54, ein Absperrventil 56, ein Druckmesser 58 und ein Durchflußmengenmesser 60 geschaltet. In einer Bypassleitung 62, welche vor dem Ventil 48 und hinter dem Ventil 56 mit dem Eingang bzw. dem Ausgang der Filtervorrichtung 50 verbunden ist, ist ein Absperrventil 64 angeordnet.

In einer Saugleitung 66, die mit der Filtervorrichtung 50 verbunden ist, sind ein Absperrventil 68, eine Rückspülpumpe 70, ein Druckmesser 72, ein Regelventil 74 und ein weiteres Absperrventil 76 angeordnet.

Eine Zweigleitung 78, die unmittelbar abströmseitig der Filtervorrichtung 50 mit der Zweigausgangsleitung 52 verbunden ist, enthält ein Absperrventil 80, eine Druckerhöhungspumpe 82, ein Rückschlagventil 84, eine Einspritzdüse 86 und ein Absperrventil 88. Die Zweigleitung 78 mündet abströmseitig des Durchflußmengenmessers 60 über eine Einspritzdüse 90 in die Ausgangsleitung 52. Abströmseitig der Einspritzdüse 90 ist ein statischer Mischer 92 in der Leitung 52 angeordnet. Abströmseitig des statischen Mischers 92 ist an die Ausgangsleitung 52 ein Druckmesser 54 angeschlossen. Die Ausgangsleitung 52 führt zu einem nicht gezeigten Tank, beispielsweise einem Ballasttank auf einem Schiff.

Eine nicht gezeigte Steuervorrichtung steuert die einzelnen Funktionen der beschriebenen Teile und Komponenten, die außerdem einige Regelkreise enthält. Nachfolgend soll die Funktion der Anlage nach Figur 1 näher erläutert werden.

Bei geöffneten Absperrventilen 12 und 18.1 bis 18.6 und geschlossenem Absperrventil 96 in einer Bypassleitung 98 für die Hydrozyklone 16.1 bis 16.6 speist die Kreiselpumpe 10 Meerwasser in die Hydrozyklone 16.1 bis 16.6. Der Unterlauf der Hydrozyklone 16.1 bis 16.6 ist mit der Leitung 26 verbunden, und die konstante Förderpumpe, vorzugsweise die Verdrängerpumpe 32 fördert ein konstantes Volumen aus dem Unterlauf der Hydrozyklone ins Meer. Die Anzahl der tatsächlich eingeschalteten Hydrozyklonen 16.1 bis 16.6 hängt jedoch von der nachgefragten Fördermenge ab, die auch proportional dem Druck sein kann, der abströmseitig der Pumpe 10 mit Hilfe des Druckmessern 100 gemessen werden kann. Bei teilweise gefülltem Ballastwassertank wird die Fördermenge notgedrungen kleiner. Die zweite Förderpumpe 32 fördert, wie erwähnt, eine konstante Wassermenge, wobei jedoch die Menge abhängig ist von der Anzahl der eingeschalteten Hydrozyklone 16.1 bis 16.6. Mit der größer werdenden Anzahl von eingeschalteten Hydrozyklonen 16.1 bis 16.6 wird die konstante Wassermenge stufenweise größer. Zur Regelung der durch die Anzahl der in Betrieb befindlichen Zyklone vorgegebenen Fördermenge der Pumpe 32 dient der Durchflußmengenmesser 30. Er sorgt dafür, daß die Fördermenge der Pumpe 32 in Abhängigkeit von der Zahl der in Betrieb befindlichen Zyklone jeweils konstant bleibt.

Anstelle einer einzigen zweiten Förderpumpe ist auch denkbar, an jedem Unterlauf eines Zyklons eine kleinere Pumpe zu schalten, um den Betrieb des Zyklons zu stabilisieren.

Dem Regelventil 38 ist eine weitere Regelvorrichtung zugeordnet, die über den Druckmesser 40 dafür sorgt, daß in der Leitung 20 ein konstanter Druck herrscht. Durch die Einstellung des Druckes in der Leitung 20 und die Abförderung des Unterlaufs in konstanter Menge wird dafür gesorgt, daß die Hydrozyklone 16.1 bis 16.6 bzw. die eingeschalteten Zyklonen unter stabilen Betriebsbedingungen arbeiten.

In der Filtervorrichtung 50, die etwa gemäß der DE 4312731 aufgebaut ist, werden organische Bestandteile, bis zu einer Größe von 50µm separiert. Das weitgehend gereinigte Wasser gelangt in die Ausgangsleitung 52, in welche über die Düsenanordnung 90 ein Desinfektionsmittel bzw. ein Biozid eingeführt wird.

Die Filtervorrichtung 50 ist rückspülbar, und ein Differenzdruckmesser 102 mißt den Druck am Eingang und am Ausgang der Filtervorrichtung. Erreicht der Differenzdruck einen vorgegebenen Wert, wird der Rückspülbetrieb in Gang gesetzt. Für diesen Zweck wird die Regelarmatur 54 von der Steuervorrichtung in Sperrstellung gefahren. Ferner wird die Rückspülpumpe 70 in Gang gesetzt bei geöffneten Absperrventilen 68 und 76 und sich langsam öffnendem Regelventil 74. Das von den Hydrozyklonen kommende Wasser dient zur Rückspülung der Filterflächen, und das Filtrat gelangt mit diesem Wasser über die Leitung 86 ins Meer zurück.

Die Bypassleitung 62 dient dazu, die Filtervorrichtung 50 zu überbrücken, sollte eine Fehlfunktion vorliegen. Dadurch ist sichergestellt, daß Ballastwasser auch in diesem Fall in den Ballasttank gepumpt werden kann.

Die Druckerhöhungspumpe 82 zweigt bei geöffnetem Absperrventil 80 aus der Ausgangsleitung 52 von der Filtervorrichtung 50 kommendes gereinigtes Wasser ab und drückt das Wasser bei geöffnetem Absperrventil 80 in die Düsenanordnung 90. Abströmseitig der Druckerhöhungspumpe 82 befindet sich eine Einspritzdüse 86, die mit einer Dosierpumpe 106 verbunden ist, die ihrerseits aus einem Biozidbehälter 108 Biozid ansaugt. Mithin findet durch die Düsenanordnung 86 und der Düsenanordnung 90 bereits ein Vormischen des Biozids mit Wasser statt. Hinter der Düsenanordnung 90 erfolgt die komplette Vermischung des Biozids mit Wasser, wobei eine weitere intensive Vermischung im statischen Mischer 92 stattfindet, der einen sehr geringen Druckabfall aufweist. Der Druck für die Vermischung wird im wesentlichen von der Druckerhöhungspumpe 82 aufgebracht, so daß hiermit die erste Förderpumpe 10 nicht belastet ist.

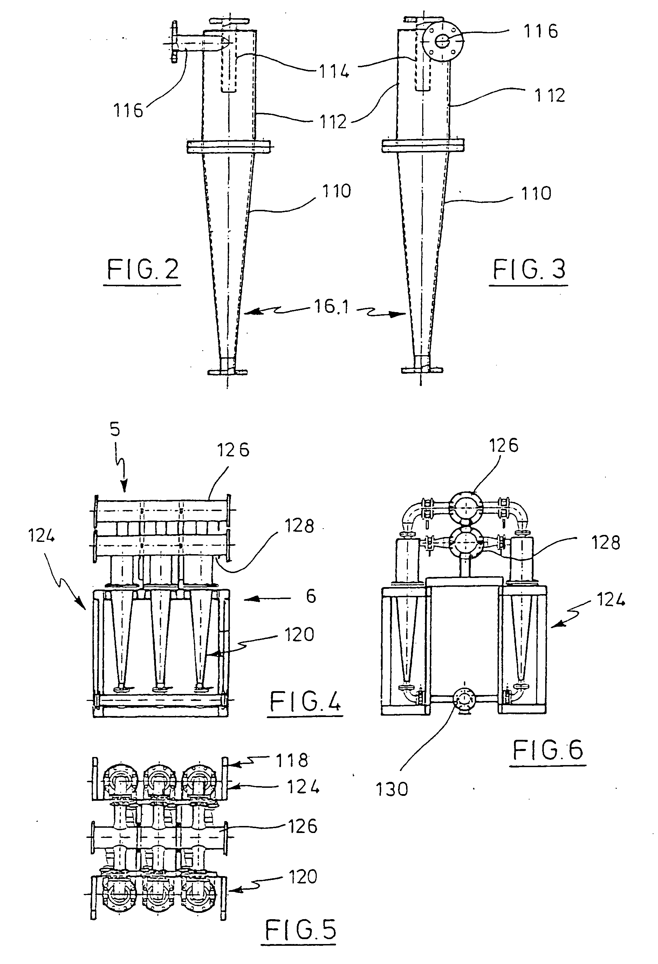

In den Figuren 2 und 3 ist etwa der Hydrozyklon 16.1 näher dargestellt. Er weist einen unteren konischen Abschnitt 110 auf, mit einem Konuswinkel von annähernd 10°. Er ist verbunden mit einem oberen zylindrischen Abschnitt 112, in den hinein von oben ein Tauchrohr 114 hineinsteht, das sich etwa um die Hälfte der Höhe des zylindrischen Abschnitts 112 nach unten erstreckt. Ein Zuführrohr 116 ist tangential im oberen Bereich mit den zylindrischen Abschnitt 112 verbunden. Der Hydrozyklon 16.1 ist so ausgeführt, daß auch Partikel abgeschieden werden deren spezifisches Gewicht nur geringfügig größer ist als das von Wasser bzw. von Seewasser.

In den Figuren 4 bis 6 ist eine Batterie von Hydrozyklonen dargestellt. Man erkennt zwei Reihen von je drei Hydrozyklonen. Die Reihen sind mit 180 bzw. 120 bezeichnet. Sie sind in einem Rahmen 124 gehalten, der zum Beispiel auf dem Deck eines Schiffes aufgestellt werden kann. Mittig zwischen den Reihen ist ein erstes Rohr 126, ein zweites Rohr 128 und ein drittes Rohr 130 angeordnet, die in einer Ebene übereinander angeordnet sind. Sie sind mit dem Oberlauf bzw. dem Zulauf bzw. dem Unterlauf der Zyklone in Verbindung. Die Anordnung der Zyklone ist außerordentlich kompakt und auch bei beengten räumlichen Verhältnissen gut unterzubringen.

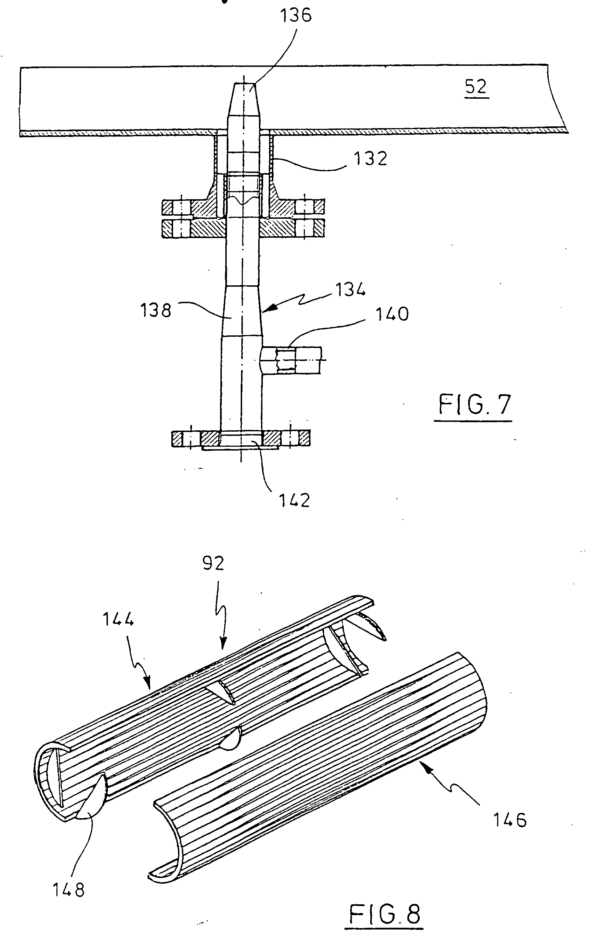

In Fig. 7 ist die Leitung 52 angedeutet, die von der Filtervorrichtung 50 kommende Ausgangsleitung. Sie weist einen seitlichen Anschluß 132 auf, durch den hindurch dichtend ein Rohr 134 geführt ist, das am oberen freien Ende eine Düse 136 aufweist und das außerhalb der Leitung 52 eine düsenartige Verengung 138 besitzt. Unterhalb der Verengung 38 ist ein seitlicher Anschlußstutzen 140 vorgesehen, der mit der Dosierpumpe 106 in Verbindung steht. Das untere Ende oder der Einlaß 142 des Rohres 134 steht in Verbindung mit der Druckerhöhungspumpe 82 nach Fig.1. Über den Stutzen 140 wird Mikrobiozid in das Rohr 134 eingebracht bzw. eingespritzt und mit Hilfe der Strömungsbeschleunigung in der düsenartigen Verengung 138 mit dem von der Druckerhöhungspumpe 142 kommenden Wasser bereits intensiv vermischt. Die Mischung aus Mikrobiozid und Wasser wird dann annähernd mittig in die Strömung in der Ausgangsleitung 52 über die Düsenanordnung 136 eingespritzt. Nach der Vormischung im Rohr 134 erfolgt nunmehr eine Vermischung in der Ausgangsleitung 52, wobei eine endgültige intensive Vermischung im statischen Mischer 92 stattfindet, der in Figur 8 angedeutet ist.

In Figur 8 ist der Mischer als aus zwei Rohrhälften 144, 146 bestehenden gezeigt, die längsmittig geteilt sind. Im Inneren des statischen Mischers 92 sind segmentartige Strömungsstörer 148 angeordnet, die jeweils einen V-förmigen Durchströmquerschnitt bilden, wobei der V-förmige Querschnitt in Achsabständen gedreht ist, so daß die Strömung um ihre Längsachse gedreht wird. Der Druckabfall in einem solchen statischen Mischer 92 beträgt etwa 0,2 bis 0,4bar.

Es sei erwähnt, daß die Hydrozyklone 16.1 bis 16.6 mit einer verschleißfesten, korrosionsbeständigen Oberfläche, z.B. einer keramischen Beschichtung versehen sein können, welche den Reibungswiderstand verringert und einen Widerstand gegen Abrieb und Korrosion bildet.

Es sei ferner noch erwähnt, daß eine dritte Regelvorrichtung die Zufuhr des Mikrobiozids aus dem Behälter 108 in die Ausgangsleitung 52 regelt, in dem die Mengenmessvorrichtung 60, das in der Leitung 52 fließende Volumen mißt, wobei die Dosierpumpe 106 das Mikrobiozid nach Maßgabe des gemessenen Volumens fördert.

## Patentansprüche

1. Anlage zur Entfernung und Deaktivierung von Organismen im Ballastwasser, mit den folgenden Merkmalen:
• eine erste Förderpumpe (10) zum Fördern des Ballastwassers,
• eine an die erste Förderpumpe (10) angeschlossene Vorrichtung zur Schwerkraftabscheidung gröberer Feststoffe und größerer Organismen,
• eine rückspülbare Filtervorrichtung (50),
• eine nachgeschaltete Vorrichtung zur Deaktivierung von Organismen, **dadurch gekennzeichnet, daß**
• die Vorrichtung zur Schwerkraftabscheidung eine Anordnung (A) von parallel geschalteten zu- bzw. abschaltbaren Hydrozyklonen (16.1 bis 16.6) aufweist und eine Steuervorrichtung, die die Zahl der eingeschalteten Hydrozyklone (16.1 bis 16.6) nach Maßgabe der gemessenen Fördermenge der ersten Förderpumpe (10) steuert,
• eine an ein Reservoir (108) für Biozid angeschlossene Dosiervorrichtung mit der Ausgangsleitung (52) der Filtervorrichtung (50) verbunden ist,
• zwischen dem Einleitungspunkt für das Biozid in der Ausgangsleitung (52) und einem aufströmseitigen Punkt der Ausgangsleitung (52) eine Druckerhöhungspumpe (82) parallel geschaltet ist und eine Dosierpumpe (106) das Biozid in die Ausgangsleitung der Druckerhöhungspumpe (82) eingibt, wobei eine Regelvorrichtung die Dosiermenge der Dosierpumpe (106) nach Maßgabe der Fördermenge in der Ausgangsleitung (52) regelt, und
• abströmseitig des Einleitungspunktes des Biozids in der Ausgangsleitung (52) ein statischer Mischer (92) angeordnet ist.

2. Anlage nach Anspruch 1, **dadurch gekennzeichnet, daß** zur Schwerkraftabscheidung mindestens eine Zentrifuge vorgesehen ist.

3. Anlage nach Anspruch 1 oder 2, **dadurch gekennzeichnet, daß** die erste Förderpumpe (10) eine Kreiselpumpe ist.

4. Anlage nach einem der Ansprüche 1 bis 3, **dadurch gekennzeichnet, daß** der Unterlauf der Hydrozyklone (16.1 bis 16.6) mit einer zweiten Förderpumpe (32) verbunden ist, der einer erste Regelvorrichtung zugeordnet ist, die die Fördermenge zum Unterlauf mißt und in Abhängigkeit von der Anzahl der eingeschalteten Hydrozyklone (16.1 bis 16.6) einen vorgegebenen konstanten Mengenstrom fördert.

5. Anlage nach einem der Ansprüche 1 bis 3, **dadurch gekennzeichnet, daß** mindestens bei einem Teil der Hydrozyklone dem Unterlauf jeweils eine Abförderpumpe zugeordnet ist.

6. Anlage nach Anspruch 4 oder 5, **dadurch gekennzeichnet, daß** die zweite Förderpumpe (32) eine Verdrängerpumpe ist.

7. Anlage nach Anspruch 4, **dadurch gekennzeichnet, daß** eine Alarmvorrichtung vorgesehen ist, die eine Alarmgabe bewirkt, wenn die Regelabweichung einen vorgegebenen Wert erreicht.

8. Anlage nach einem der Ansprüche 1 bis 7, **dadurch gekennzeichnet, daß** in der Leitung (36) zur Filtervorrichtung (50) ein Regelventil (38) angeordnet ist, dem eine zweite Regelvorrichtung zugeordnet ist, die durch Regelung des Durchströmquerschnitts des Regelventils (38) einen vorgegebenen Druck in der aufströmseitigen Leitung (20) aufrechterhält.

9. Anlage nach einem der Ansprüche 1 bis 8, **dadurch gekennzeichnet, daß** die Filtervorrichtung (50) so ausgebildet ist, daß bei Umschaltung auf Rückspülbetrieb ihr Einlauf mit der Ablaufseite einer Filterfläche verbunden ist, während die Einlaufseite der Filterfläche mit einer Rückspülpumpe (70) in einem Rückspülzweig (66) verbunden ist.

10. Anlage nach Anspruch 9, **dadurch gekennzeichnet, daß** zwischen Ein- und Auslauf der Filtervorrichtung (50) ein Druckmesser (102) geschaltet ist und die Steuervorrichtung den Rückspülbetrieb in Gang setzt, wenn der Druck einen vorgegebenen Wert erreicht.

11. Anlage nach einem der Ansprüche 1 bis 10, **dadurch gekennzeichnet, daß** die Druckerhöhungspumpe (82) mit dem Ende eines Einleitungsrohrs verbunden ist, das eine düsenförmige Verengung (138) abströmseitig des Anschlusses der Dosierpumpe (106) aufweist.

12. Anlage nach Anspruch 11, **dadurch gekennzeichnet, daß** das Rohr (134) am Ende eine Düse (136) aufweist, die annähernd in der Mitte der Ausgangsleitung (52) mündet.

13. Anlage nach einem der Ansprüche 1 bis 12, **dadurch gekennzeichnet, daß** der statische Mischer (92) einen geringen Druckverlust aufweist.

14. Anlage nach einem der Ansprüche 1 bis 13, **dadurch gekennzeichnet, daß** ein absperrbarer Bypass (62) für die Filtervorrichtung (50) vorgesehen ist.

15. Anlage nach einem der Ansprüche 1 bis 14, **dadurch gekennzeichnet, daß** ein absperrbarer Bypass (89) für die Hydrozyklone (16.1 bis 16.6) vorgesehen ist.

16. Anlage nach einem der Ansprüche 1 bis 15, **dadurch gekennzeichnet, daß** die Hydrozyklone (16.1 bis 16.6) in Reihe in einem gemeinsamen Rahmen (124) angebracht sind und Oberlauf, Unterlauf und Zulaufleitung mit parallel angeordneten Rohren (126, 128, 130) verbunden sind.

17. Anlage nach Anspruch 16, **dadurch gekennzeichnet, daß** zwei Reihen (118, 120) von parallel angeordneten Hydrozyklonen vorgesehen sind und die parallelen Rohre annähernd mittig zwischen den Reihen (118, 120) angeordnet sind.

18. Anlage nach einem der Ansprüche 1 bis 17, **dadurch gekennzeichnet, daß** die Filtervorrichtung (50) eine Porengröße von 50 µm bis 300 µm aufweist.

19. Anlage nach einem der Ansprüche 1 bis 18, **dadurch gekennzeichnet, daß** die Hydrozyklone (16.1 bis 16.6) eine verschleißfeste und korrosionsbeständige Oberfläche aufweisen.

## Claims

1. Installation for the removal and the deactivation of organisms in the ballast water, with the following characteristic features:
- a first feed pump (10) for conveying the ballast water,
- an equipment for gravity precipitation of coarser solids and bigger organisms, connected to the first feed pump (10),
- a backwashable filtration equipment (50),
- a downstream side connected equipment for the deactivation of organisms, **characterized in that**
- the equipment for gravity precipitation has an arrangement (A) of parallel connected hydrocyclones (16.1 to 16.6) which are switchable on and off, respectively, and a control equipment which controls the number of switched-on hydrocyclones (16.1 to 16.6) in accordance with the measured conveying volume of the first feed pump (10),
- a dosage equipment, joined to a reservoir (108) for biocide, is connected with the outlet duct (52) of the filtration equipment (50),
- a pump for increasing the pressure (82) is parallel connected between the inlet point for the biocide in the outlet duct (52) and an upstream side point of the outlet duct, and that a dosage pump (106) feeds the biocide into the outlet duct of the pump for increasing the pressure (82), whereas a regulating equipment is provided, which regulates the dosage volume of the dosage pump (106) in accordance with the conveying volume in the outlet duct (52) and
- on the side downstream to the inlet point of the biocide a static mixer (92) is disposed in the outlet duct (52).

2. Installation according to claim 1, **characterised in that** at least one centrifuge is provided for gravity precipitation.

3. Installation according to claim 1 or 2, **characterised in that** the first feed pump (10) is a rotatory pump.

4. Installation according to any one of claims 1 to 3, **characterised in that** the underflow of the hydrocyclones (16.1 to 16.6) is connected to a second feed pump (32), to which a first regulating equipment is associated which measures the conveying volume to the underflow and conveys a predetermined constant volume flow, dependent on the number of switched-on hydrocyclones (16.1 to 16.6).

5. Installation according to any one of claims 1 to 3, **characterised in that** in at least a part of the hydrocyclones, one downstream conveying pump is associated to each underflow.

6. Installation according to claim 4 or 5, **characterised in that** the second feed pump (32) is a positive-displacement pump.

7. Installation according to claim 4, **characterised in that** an alarm equipment is provided which effectuates the giving of an alarm when the deviation reaches a predetermined value.

8. Installation according to any one of claims 1 to 7, **characterised in that** a control valve (38) is disposed in the duct (36) to the filtration equipment (50), to which a second regulating equipment is associated, which maintains a predetermined pressure in the upstream side duct (20) by regulating the opening area of the control valve (38).

9. Installation according to any one of claims 1 to 8, **characterised in that** the filtration equipment (50) is formed such that upon switching to the backwashing mode of operation, its inlet is connected with the outlet side of a filtering surface, whilst the inlet side of the filtering surface is connected to a backwashing pump (70) in a backwashing branch (66).

10. Installation according to claim 9, **characterised in that** a pressure gauge (102) is intercalated between the inlet and the outlet of the filtration equipment (50) and that the control equipment initiates the backwashing mode of operation when the pressure reaches a predetermined value.

11. Installation according to any one of claims 1 to 10, **characterised in that** the pump for increasing the pressure (82) is connected to an end of an inlet pipe, which has a nozzle-shaped contraction (138) on the side downstream of the tie-in point of the dosage pump (106).

12. Installation according to claim 11, **characterised in that** the pipe (134) has a nozzle (136) on its end, which runs approximately into the midst of the outlet duct (52).

13. Installation according to any one of claims 1 to 12, **characterised in that** the static mixer (92) has a low pressure drop.

14. Installation according to any one of claims 1 to 13, **characterised in that** a closable bypass (62) is provided for the filtration equipment (50).

15. Installation according to any one of claims 1 to 14**, characterised in that** a closable bypass (89) is provided for the hydrocyclones (16.1 to 16.6).

16. Installation according to any one of claims 1 to 15, **characterised in that** the hydrocyclones (16.1 to 16.6) are installed in series in a common frame (124) and that upperflow, underflow and supply duct are connected with parallel arranged pipes (126, 128, 130).

17. Installation according to claim 16, **characterised in that** two rows (118, 120) of parallel arranged hydrocylones are provided, and that the parallel pipes are disposed approximately in the midst between the rows (118, 120).

18. Installation according to any one of claims 1 to 17, **characterised in that** the filtration equipment (50) has a pore size of 50 µm to 300 µm.

19. Installation according to any one of claims 1 to 18, **characterised in that** the hydrocyclones (16.1 to 16.6) have a wear-resisting and corrosion-proof surface.

## Revendications

1. Appareil pour enlever et désactiver les organismes présents dans l'eau de lestage, comprenant les caractéristiques suivantes :
• une première pompe de refoulement (10) pour refouler l'eau de lestage,
• un dispositif raccordé à la première pompe de refoulement (10) pour la séparation gravitaire de matières solides relativement grossières et d'organismes relativement gros,
• un dispositif de filtration (50) avec lavage à contre-courant,
• un dispositif en aval pour désactiver des organismes, **caractérisé en ce que**
• le dispositif pour la séparation gravitaire présente un arrangement (A) d'hydrocyclones (16.1 à 16.6) connectés en parallèle pouvant être connectés ou déconnectés et un dispositif de commande qui commande le nombre des hydrocyclones (16.1 à 16.6) mis en service conformément au débit mesuré de la première pompe de refoulement (10),
• un dispositif de dosage raccordé à un réservoir (108) pour biocide est relié à la ligne de sortie (52) du dispositif de filtration (50),
• entre le point d'introduction pour le biocide dans la ligne de sortie (52) et un point en amont de la ligne de sortie (52), une pompe de surpression (82) est branchée en parallèle et une pompe de dosage (106) introduit le biocide dans la ligne de sortie de la pompe de surpression (82), dans lequel un dispositif de réglage règle la quantité de dosage de la pompe de dosage (106) conformément au débit dans la ligne de sortie (52) et
• un mélangeur statique (92) est disposé en aval du point d'introduction du biocide dans la ligne de sortie (52).

2. Appareil selon la revendication 1, **caractérisé en ce qu'**au moins une centrifugeuse est prévue pour la séparation gravitaire.

3. Appareil selon la revendication 1 ou 2, **caractérisé en ce que** la première pompe de refoulement (10) est une pompe centrifuge.

4. Appareil selon l'une des revendications 1 à 3, **caractérisé en ce que** la sousverse des hydrocyclones (16.1 à 16.6) est reliée à une seconde pompe de refoulement (32) à laquelle est attribué un premier dispositif de réglage qui mesure le débit vers la sousverse et refoule selon le nombre d'hydrocyclones (16.1 à 16.6) en service un débit constant prédéfini.

5. Appareil selon les revendications 1 à 3, **caractérisé en ce qu'**au moins pour une partie des hydrocyclones, une pompe de déchargement est respectivement attribuée à la sousverse.

6. Appareil selon la revendication 4 ou 5, **caractérisé en ce que** la seconde pompe de refoulement (32) est une pompe volumétrique.

7. Appareil selon la revendication 4, **caractérisé en ce qu'**un dispositif d'alarme est prévu qui provoque une alarme lorsque le décalage de réglage atteint une valeur prédéfinie.

8. Appareil selon l'une des revendications 1 à 7, **caractérisé en ce que** dans la ligne (36) vers le dispositif de filtration (50) est disposée une soupape de réglage (38) à laquelle est attribué un second dispositif de réglage qui maintient par le réglage de la section d'écoulement de la soupape de réglage (38) une pression prédéfinie dans la ligne (20) en amont.

9. Appareil selon l'une des revendications 1 à 8, **caractérisé en ce que** le dispositif de filtration (50) est conçu de telle sorte que lors d'une commutation en mode de lavage à contre-courant, son admission est reliée au côté sortie d'une surface filtrante alors que le côté admission de la surface filtrante est relié à une pompe de lavage à contre-courant (70) dans un embranchement de lavage à contre-courant (66).

10. Appareil selon la revendication 9, **caractérisé en ce qu'**entre l'admission et la sortie du dispositif de filtration (50), un manomètre (102) est branché et le dispositif de commande met en route le mode de lavage à contre-courant lorsque la pression atteint une valeur prédéterminée.

11. Appareil selon l'une des revendications 1 à 10, **caractérisé en ce que** la pompe de surpression (82) est reliée à l'extrémité d'un tuyau d'admission qui présente un rétrécissement en forme de buse (138) en aval du raccordement de la pompe de dosage (106).

12. Appareil selon la revendication 11, **caractérisé en ce que** le tuyau (134) présente à son extrémité une buse (136) qui débouche à peu près au milieu de la ligne de sortie (52).

13. Appareil selon l'une des revendications 1 à 12, **caractérisé en ce que** le mélangeur statique (92) présente une faible perte de pression.

14. Appareil selon l'une des revendications 1 à 13, **caractérisé en ce qu'**une dérivation (62) pouvant être verrouillée est prévue pour le dispositif de filtration (50).

15. Appareil selon l'une des revendications 1 à 14, **caractérisé en ce qu'**une dérivation (89) pouvant être verrouillée est prévue pour les hydrocyclones (16.1 à 16.6).

16. Appareil selon l'une des revendications 1 à 15, **caractérisé en ce que** les hydrocyclones (16.1 à 16.6) sont appliqués en série dans un cadre commun (124) et surverse, sousverse et conduite d'arrivée sont reliées à des tuyaux (126, 128, 130) disposés parallèlement.

17. Appareil selon la revendication 16, **caractérisé en ce que** deux rangées (118, 120) d'hydrocyclones disposés parallèlement sont prévues et les tuyaux parallèles sont disposés approximativement au centre entre les rangées (118, 120).

18. Appareil selon l'une des revendications 1 à 17, **caractérisé en ce que** le dispositif de filtration (50) présente une taille de pore de 50 µm à 300 µm.

19. Appareil selon l'une des revendications 1 à 18, **caractérisé en ce que** les hydrocyclones (16.1 à 16.6) présentent une surface résistante à l'usure et à la corrosion.
